# EUROPEAN PATENT APPLICATION

(11) **EP 2 317 188 A2**
(43) Date of publication of application: **04.05.2011**
(21) Application number: 10173225.3
(22) Date of filing: 18.08.2010
(51) Int. Cl.: F16K 1/22

(54) **Flow control valve**

(30) Priority: 30.10.2009 GB 0919068
(71) Applicant: Siemens VAI Metals Technologies Ltd., Sheffield, Yorkshire S9 1XU (GB)
(72) Inventor: Beeston, John, Poole, Dorset BH15 3QH (GB); Owen, Rupert, Sheffield, Yorkshire S11 8HP (GB)
(74) Representative: Morgan, Marc

(57) **Abstract**

A flow control valve is described which meets the operational requirements of a cooling machine for hot metal strips or plates. The valve (1) is operated by a pneumatic actuator (4) which is controlled by use of a high performance pneumatic proportional valve (23) in conjunction with an electronic controller (26) receiving reference and feedback signals.

## Description

The invention is concerned with the accurate and fast control of fluid flow by a valve. It is particularly useful for the control of water flow during cooling of hot metal strips or plates but finds application in other areas where accurate and fast control of fluid flow is required.

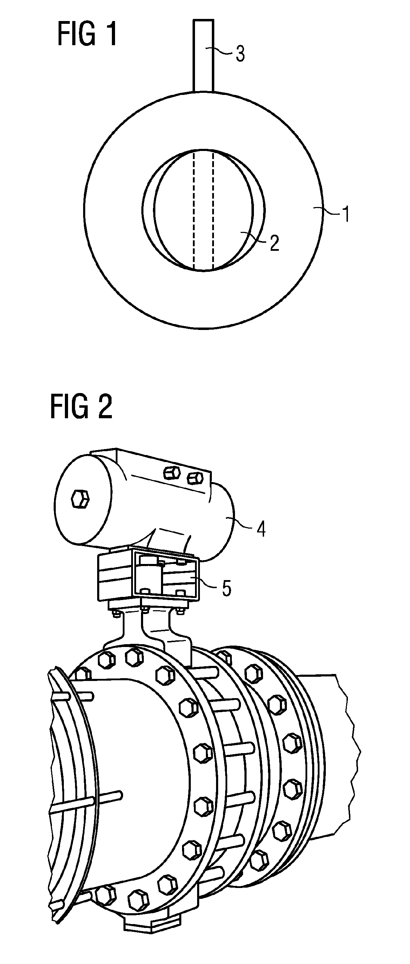

A very common type of valve that is used in industry is the butterfly type valve illustrated in Figure 1. The body of the valve 1 is clamped between flanges in a pipe. A rotatable barrier, known as a butterfly, 2 is rotated by the shaft 3 to control the flow through the valve and hence the pipe.

The most common method of actuating the shaft 3 is using pneumatics. A typical installation is illustrated in Figure 2. The shaft of the butterfly valve is connected to the pneumatic actuator 4 by a coupling 5.

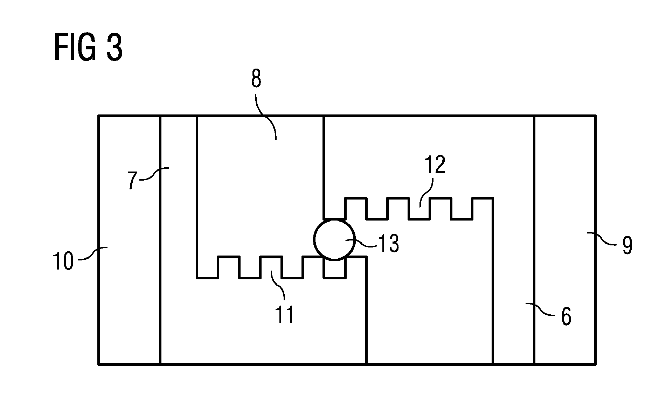

There are many different types of pneumatic actuator available in the market but a typical design is illustrated in Figure 3. The pistons 6 and 7 are moved by air pressure in chambers 8, 9 and 10. If the force on the pistons due the air pressure in chambers 9 and 10 is greater than the force on the pistons due to the air pressure in chamber 8 then the pistons tend to move towards the closed position and vice versa. Movement of the pistons is transferred to the shaft which operates the valve by the racks 11 and 12 and pinion 13 (teeth on pinion omitted for clarity).

If the valve is only going to be used for simply on-off control of the flow then the air pressure to the actuator chambers 8, 9 and 10 can be switched using, for example, solenoid operated pneumatic valves.

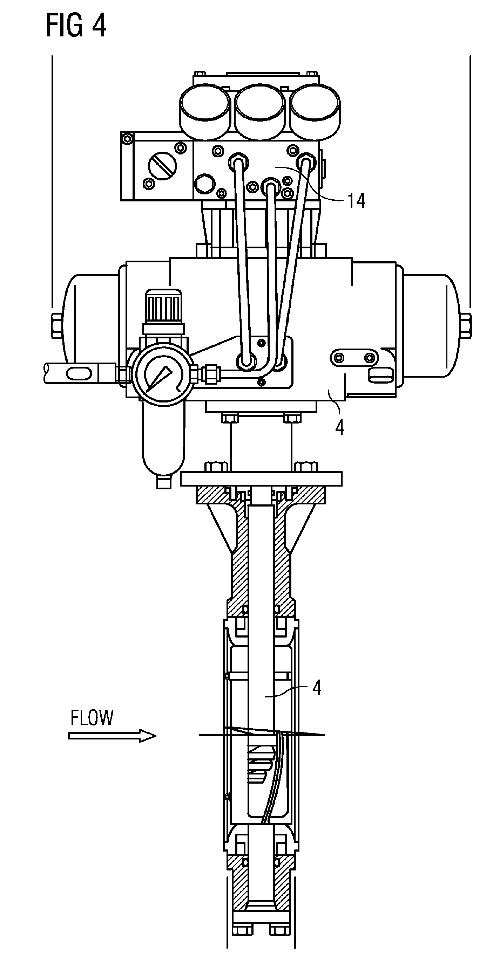

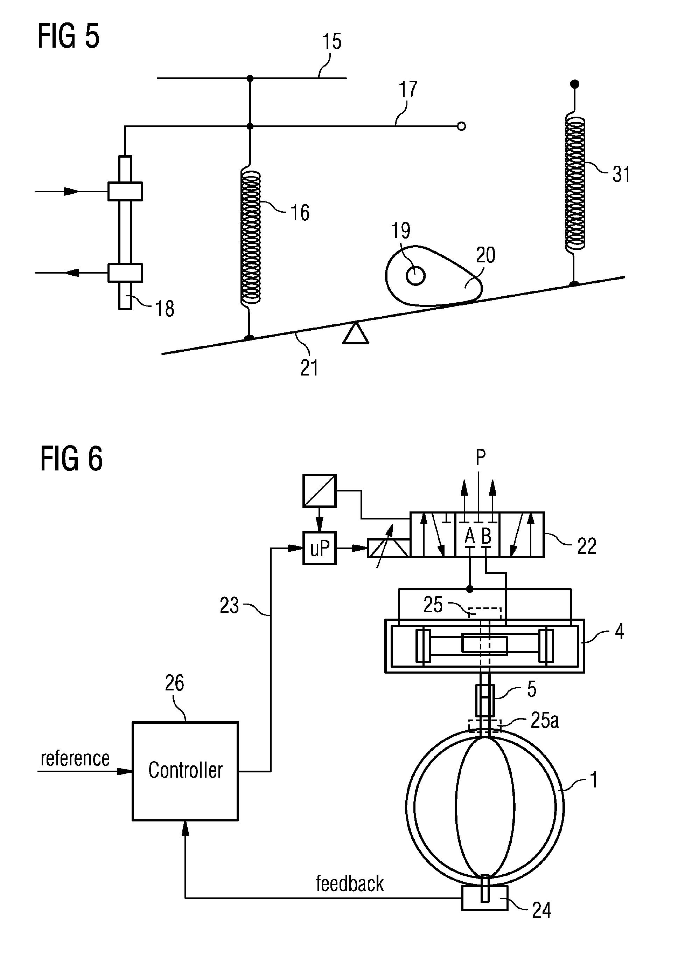

However, in order to use the valve for flow control it is necessary to control the position of the butterfly. The most common method of controlling the position of the butterfly is using an electro-pneumatic device known as a positioner. There are many different designs of positioner available in the market but a typical design is illustrated in Figures 4 and 5. Figure 4 shows how the positioner 14 is usually mounted on the actuator 4. Figure 5 illustrates a typical internal arrangement of a positioner. The unit contains an I/P convertor (i.e. current to pressure) convertor (not shown). This takes an electrical current input signal - typically 4-20 mA - and produces an air pressure which is proportional to the electrical current signal. The air pressure from the I/P convertor acts upon a diaphragm 15. This is the control force. On the other side of the diaphragm is a feedback spring 16 and balance arm 17 which is attached to spool 18. An increase in air pressure from the I/P convertor causes the diaphragm 15 to move down against the feedback spring 16. This moves the balance arm 17 and hence the spool 18. The movement of the spool opens ports in such a way that air is allowed to flow into one side of the actuator and out of the other side of the actuator.

The spindle 19 and cam 20 provide a feedback mechanism. The spindle 19 is connected to an extension of the actuator shaft so that when the actuator moves the spindle moves as well. Rotation of the spindle causes the cam 20 to rotate which in turn moves the lower arm 21 up which increases the force onto the diaphragm from the feedback spring. The lower arm 21 is biased against cam 20 by spring 31 or other suitable biasing means. When the feedback force balances the control force then the diaphragm and balance arm move back to the zero position in which the spool is closed and the movement of the actuator stops. Different cams 20 can be used to give different characteristic curves for the position of the valve versus the reference signal.

Whilst the detailed design of positioners varies between different suppliers the general principles are similar in that they use mechanical-pneumatic force amplification to operate the main spool 18 and they use mechanical feedback of the valve position.

For many purposes the prior art designs described above are satisfactory but numerous problems include:
The response time of the valve tends to be very non-linear; it is generally OK on large movements but very poor for very small movements.
The response time tends to be different for opening and closing movements of the valve.
The position control of the valve tends to have significant hysteresis because of the mechanical feedback arrangement and the poor response for small movements.
The zero and span adjustments of the positioner are time consuming and they tend to drift over time.

Another problem with the prior art designs is that the requirements for speed of response and for accuracy conflict with each other. To achieve a fast response from the valve a small actuator (i.e. an actuator with relatively small diameter pistons) has to be used so that a given air flow from the positioner produces fast movements of the valve. Unfortunately the use of a small actuator also means that only a limited actuator force is available and it is difficult to achieve accurate movements. Conversely, to achieve accurate positioning of the valve, a large actuator can be used so that the air flow from the positioner only results in small movements of the valve.

In the prior art there are many example of positioners which have electronic position feedback units built into them or available as an add-on. However these electronic position feedback units are not used for closed loop position control of the valve; they are generally used for monitoring purposes only.

In the prior art the only solutions to these problems with pneumatically actuated and positioned valves have been to use either electro-mechanical actuation or hydraulic actuation.

Electro-mechanical actuation using solenoids or stepper motors or similar techniques can achieve good performance on small valves but in general it is not possible or would be very expensive on large valves because the forces that can be generated by reasonably sized solenoids or stepper motors are small compared with the forces that can be generated by pneumatic actuators.

Hydraulic actuation of valves can achieve very fast response and high accuracy because the hydraulic fluid is much less compressible than air. However the cost of a hydraulic pump set plus hydraulic control valves and actuators is significantly higher than for pneumatics.

High performance pneumatic proportional valves are known in the art - for example the Norgren VP60
http://www.norgren.com/virtualpresscentre/pressreleases/itemdetail.asp?ItemID=239

These valves produce an air flow which is roughly proportional to the input electrical signal. Typically, they are used for rotational speed control, velocity control etc. where the fact that the air flow is proportional to the electrical signal means that the speed of the pneumatic motor or actuator will also be roughly proportional to the electrical signal.

An object of the invention is to provide a flow control valve offering advantages over the prior art in terms of *inter alia* speed of response and accuracy.

According to the invention a flow control valve comprises the features set out in claim 1 attached hereto.

In a preferred embodiment the means for generating a feedback signal comprises means for measuring position and generating an electrical signal indicative thereof.

In another preferred embodiment, the means for measuring position is attached to the barrier side of a coupling between the pneumatic actuator and the shaft.

The controller may advantageously arranged to provide a control signal which is a non-linear function of at least one of the feedback signal, the reference signal and the difference between said control signal and said reference signal.

The valve may be a rotary valve, wherein the barrier is rotatable between the first and second position and comprising means for generating a feedback signal indicative of the angular position of the barrier.

The invention is especially useful for the control of water for the cooling of hot metal strips or plates.

The invention will now be described, by non-limiting example, with reference to the appended figures in which:
figure 1 illustrates a 'butterfly' type flow control valve according to the prior art;
figure 2 represents an installation of a flow control valve including its pneumatic actuator and coupling;
figure 3 illustrates the mechanism of a typical pneumatic actuator according to the prior art;
figures 4 and 5 illustrate a typical positioner device used to control the position of the butterfly;
figure 6 illustrates a flow control valve according to the invention and
figure 7 illustrates some output characteristics of a controller used in a flow control valve according to the invention.

The invention is described herein with reference to the 'butterfly' type valve that is well known in the art. Nevertheless, it will be apparent to those skilled in the art that the invention is applicable to other types of valve, for example a 'gate' type valve, also well known in the art, or other types of valve which operate by movement of a barrier between positions in and out of a fluid path.

Referring to figure 6, the valve 1 is operated by a conventional pneumatic actuator 4 which is mechanically connected to the valve shaft either directly or by the coupling 5. The mounting bracket for the actuator is omitted for clarity.

The pneumatic actuator 4 is connected by pneumatic pipes to a pneumatic proportional type valve 22. The details of this valve will vary between manufacturers and model types but the general characteristic is that a positive control signal 23 causes the valve spool to move such that air flows from P to A whilst at the same time air is allowed to flow from B to the exhaust ports. The control signal 23 is typically derived from an error signal, which in turn is derived from the difference between a reference signal and a feedback signal. The feedback signal is representative of the barrier position. A negative control signal 23 causes air to flow from P to B whilst at the same time allowing air from A to flow to the exhaust ports. Furthermore the opening of the valve is roughly proportional to the control signal 23 so that the larger the magnitude of the signal the greater the air flow.

An angular position measurement device such as an encoder is also attached to the valve as shown at 24. In an alternative arrangement the angular position measurement device could be mounted on an extension of the actuator shaft as shown at 25 or it could be mounted between the valve and the actuator as shown at 25a. Positions 24 and 25a have the advantage that any clearances in the coupling 5 or other connection between the valve and the actuator do not affect the angular position measurement.

The angular position measurement feedback is connected to the controller 26. In the controller the reference position is compared with the feedback position and a control signal 23 is generated to move the valve 22 to remove any error between the reference and the feedback position.

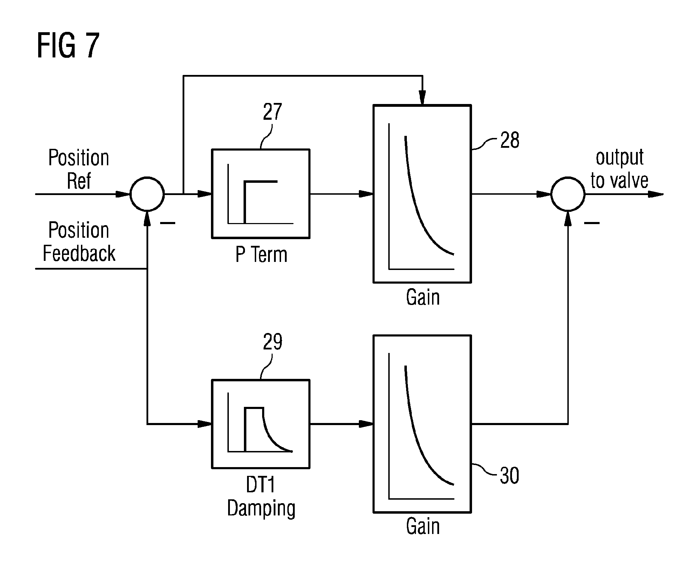

A significant advantage of the invention is that the controller 26 is electronic - typically a PLC or other micro-processor based controller - and therefore it can contain non-linear functions to improve the performance of the valve. A simplified diagram is shown in Figure 7. This simplified version of the controller includes a proportional gain 27 which is modified by the non-linear function 28 which is a function, in this example, of the sign and the magnitude of the error signal. Using this one can, for example, have much higher gain for small errors (discrepancies between the required and actual valve setting) and lower gain for large errors and also, for example, have different gains for positive and negative errors. This example controller also contains a damping term 29 which is a function of the rate of change of the feedback signal. This damping term 29 is also modified by a non-linear function 30 which is a function, in this example, of the size and sign of the feedback signal.

In summary, the invention uses electronic feedback of the valve position together with an electronic controller and a pneumatic proportional type flow control valve to control the position of a butterfly type flow control valve. The use of non-linear terms within the controller to improve the performance of the valve - in particular the response for different size movements and for different directions of movement. The mounting of the electronic feedback unit for the valve position at positions 24 or 25a so that any clearances in the coupling between the valve and the actuator do not effect the feedback position measurement.

The advantages offered include more consistent response times for large and small movements and for movements in opposite directions; reduced hysteresis; easier set-up (the zero and span adjustments are made electronically) and no drift of the zero or span.

## Claims

1. A flow control valve comprising:
a housing defining a fluid conduit;
a barrier moveable between a first position offering maximum impedence to fluid flowing in the housing and a second position offereing minimum impedence to fluid flowing in the conduit;
a pneumatic actuator, arranged and operable to drive the barrier to positions interdediate of, and including, the first and second positions via a shaft;
a pneumatic proportional valve, suitable for providing an air flow to the pneumatic actuator, the airflow being proportional to an input electrical signal and switchable between at least two flow paths;
means for generating a feedback signal indicative of the position of the barrier and
a controller arranged to receive the feedback signal and a reference signal dependent on a required barrier position, and to provide a control signal to the pneumatic proportional valve.

2. A flow control valve according to claim 1, wherein the means for generating a feedback signal comprises means for measuring position and generating an electrical signal indicative thereof.

3. A flow control valve according to claim 2 where the means for measuring position is attached to the barrier side of a coupling between the pneumatic actuator and the shaft.

4. A flow control valve according to any of claims 1 - 3, where the controller comprises means to derive a control signal from a non-linear function of at least one of the feedback signal, the reference signal and the difference between said control signal and said reference signal.

5. A flow control valve according to any of claims 1 - 4, being a rotary valve, wherein the barrier is rotatable between the first and second position and comprising means for generating a feedback signal indicative of the angular position of the barrier.

6. A method for the cooling of hot metal stripsor plates comprising a step providing a flow control valve as claimed in any one of claims 1 to 5, operating the valve to control the application of coolant flow to the hot metal strips or plates.
